(19) **Europäisches Patentamt**
**European Patent Office**
**Office européen des brevets**

(11) **EP 2 234 371 B1**

(12) **EUROPEAN PATENT SPECIFICATION**

(45) Date of publication and mention
of the grant of the patent:
**07.12.2011 Bulletin 2011/49**

(51) Int Cl.:
*H04L 29/06* (2006.01)   *H04N 5/44* (2011.01)
*H04N 7/16* (2011.01)

(21) Application number: **10156786.5**

(22) Date of filing: **17.03.2010**

(54) **A method for expediting channel change in IP television products**

Verfahren zur Beschleunigung der Kanalumschaltung in IP-Fernsehprodukten

Procédé pour accélérer le changement de canal dans des produits de télévision par IP

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **25.03.2009 TR 200902333**

(43) Date of publication of application:
**29.09.2010 Bulletin 2010/39**

(73) Proprietor: **Vestel Elektronik Sanayi ve Ticaret A.S.
45030 Manisa (TR)**

(72) Inventor: **Tuncer, Bora
45030 Manisa (TR)**

(74) Representative: **Cayli, Hülya
Paragon Consultancy Inc.
Koza Sokak No: 63/2
GOP
06540 Ankara (TR)**

(56) References cited:
**US-A1- 2006 117 342    US-A1- 2006 190 594
US-A1- 2007 186 243    US-A1- 2009 019 469**

Printed by Jouve, 75001 PARIS (FR)

## Description

## Technical Field

Present invention is related to an iterative method containing developed possibilities algorithms for the dynamic formation of the channel panel with the aim of decreasing channel switching duration in low cost embedded systems.

## Prior Art

In electronic systems based on internet protocol, particularly in low cost IP (Internet Protocol) television systems, channel changing time is an important measure indicating the performance of the target platform. Owing to many parameters such as system complexity, network troubles, bad network topology encountered in the IP world, the delay in the system can be considered as the most basic problem from the user point of view.

Activities directed to update channel information required for channel switching are available in the known status of the technique. Since the IP television technology is also related to internet protocol, as is known the channel information is initially transmitted through a server system, passes through the control points on the network, and finally follows a path which reaches to the users by client devices such as set-top boxes. Along with being an up-to-date field, it is observed that the updating of the channel information is being performed by broadcasting system in the television technologies of today.

However in the IP television world, it is observed that some servers are performing the updating activity. Therefore, there exists no activity where the updating of channel information is being carried out by the client within the known art. Patent application number US2009019469 can be shown as a sample of present studies. In the related patent application there is a mention of updating the channel information automatically by a message forwarded by the server and the network. In the present invention however, the necessary updating of the channel information is performed again on the client side by accumulating the channel information under a table by a stochastic algorithm formed by the client. Subject invention is a new application in the art, since the updating action is being performed by the client instead of broadcasting system.

Another related document with patent application number US2006190594A1 discloses a method and an apparatus for evaluation of service quality of a real time application operating over a packet-based network. According to this application, a packet based network is actively probed by transmitting one or more sequences of packets along a path of the packet based network; transmission characteristic data, which is representative of responses of the packet-based network to transmission of the one or more sequences of packets along the path for the path, is determined; a test signature representative of said transmission characteristic data is determined and a suitable loss impairment model, which provides a means for evaluating the perceived quality of a real-time application operating over a packet-based network, based on a known signature comparable to the test signature is identified.

Another document that related to the prior art of the present invention, patent application number US2007186243A1 discloses a system and method of providing television program recommendations. According to said method a user review of a television program from a set-top box device via an access network of an Internet Protocol Television (IPTV) system is received, the user review with a user of the set-top box device is associated, a request for programming recommendations from the set-top box device is received and a recommendation list that includes at least one recommended program is generated.

Another patent document with application number US2006117342A1 discloses a method for obtaining broadcasting channel information and registering for reception of multi cast based Internet protocol (IP) TV broadcasting service in a subscriber network. According to said method; authentication of a terminal and a subscriber is completed; a web server providing an electronic program guide (EPG) and receiving information on at least one or more channels permitted to the terminal is accessed; at least one or more selection units by using graphic user interface (GUI) so that a channel is selected based on the channel information is provided and a multi cast socket is generated and transmitted according to selected channel.

As is observed in the known art, a certain amount of delay occurs during transmission of the data channel in the communication systems. The increase in distance from the data source and the number of devices in between are some of the main reasons of delay. Since where the related algorithm is integrated is located on the client side, the present invention decreases the effect during switching of the delay generated by the subject transmission and is operable with all kinds of network topology.

## Brief Description of the Invention

Probing basically is finding action of broadcasting parameters such as existing elements inherent in the broadcast, different alternate audio language and subtitles. The channels are decoded by means of these advance information and displayed on the screen.

The channels in the subject invention are being graded according to switching possibilities and time out values calculated by the network for each channel. Algorithm contained in the present invention is based on starting probing when the channel reaches the time out period and resorting to probing action by checking the time outs of the channels while in process.

## Objective of the Invention

The objective of the present invention is to develop a system and method directed to decrease the channel switching period in electronic devices such as set-top receivers, digital televisions, media players operating over Internet Protocol and especially in IP televisions.

Another objective of the present invention is to decrease the channel switching period by holding the channel information in a table and allowing effecting the continuous updating within this channel table instead of relearning the channel information at every channel switching.

Another objective of the present invention is to use the system source more controlled by grading the related channel table by a certain stochastic model and probing the channels according to the values of this grading since it performs updating at its own possible updating frequency.

## Brief Description of the Drawings

**Figure-1** is a flow chart of an embodiment of the present invention.

## Description of the Invention

In the embedded systems basically there are two points which must be attributed importance. The first important point is to use the system source as little as possible and the second important point is the status of answering the client demands within the shortest time possible. Subject invention carries importance in view of decreasing the duration of channel switching. The algorithm mentioned in the method contained in the subject invention, aims to provide a fast solution to the delay problem during channel switching without using an important portion of the channel source based on the calculated possibilities. The possibilities are being calculated by using the previous metadata of the channels.

In addition, there are other parameters affecting the system performance during decoding task. In the television channel broadcasting to numerous points, if the PID (Packet Identification) of the video broadcast, the PID of the audio broadcast, the codes of video and audio broadcasts are provided, decoding and playing the incoming broadcast is an easy task. In the cases where these data are not provided, shifting to probe position is on in order to learn the minimum information order required for decoding.

In the conventional MPEG-2 type television broadcasts broadcasted over satellite, the following main tables belonging to Program Special Information (PSI) are provided excluding the tables related with the broadcast information;

- (PAT- Program Association Table) - establishes the association between the PID of each packet related with Program Map Table (PMT) and the program number.

- (PMT- Program Map Table) - contains all PID information related with Coding and License Information (ECM).

- Conditional Access Table (CAT) - Indicates PIDs of each packet bearing Licence Inspection Information (EMM) pertinent to systems with one or more codes.

Only MPEG-2 type channel broadcast is not being carried out in the IP television world. Therefore, transmittal of the above tables by server systems is not mandatory. During Probing process, if the program is containing MPEG-2 standard broadcast flow, Program Map Tables provide metadata related with broadcast. In order to find the Program Map Tables (PMT) containing information related with the program, Program Association Table (PAT) where all current programs in the transmitted broadcast are listed is used. If the broadcast is not in MPEG-2 standard, the target system is compelled to try to decode the incoming broadcast codes by using all incoming broadcast codes. Since the internet sub-structure is slower than satellite communication, the video and television channels are coded by using techniques such as H264 and MPEG-4 which generates more compaction of the image instead of MPEG-2 coding in the decoding of IP television. Therefore, the systems forming PAT - PMT tables are not used in IP television server products.

Apart from this, it is known that the probing process causes delay during channel changing, since the video broadcast PID parameters of some channels are often changed. The general loop in the applications of today is as follows: The system always looks at the table when the client changes channel and updates the channels on the table by re-probing the information required for decoding the related channel before the channel is in a visible status on the client side. The probing process of the advance information and also updating of the channel advance information are not the features controlled by client device(s). In the applications of our day subject tables and their updating is performed by the server. The present invention provides the opportunity of probing the tables containing channel information on the basis of stochastic method on the side of client device(s) and updating channel tables.

Operationally/ normally, to display a channel in the IP television world probing process has to be performed and following basic information has to be learned.

- video PID

- amount of audio data contained (German, English, etc..)

- PID of the data of the audio to be played first

- PIDs of the data of other audio to be played

- Code type of video; MPEG2, H264, H263 etc.

- Code type of audio data; AC3, AAC, PCM. MP3 etc.

The fundamental feature of the algorithm of the present invention is related to calculating the changing probability by using the information learned before.

In the invention, the ideal situation is called zero change. In this situation, the entries on the channel tables are not changed, the data on the tables remain static and the channels are probed with the information taken from these tables.

In the mentioned algorithm, Euclid Norm is used to calculate the distance for zero change

$$L_m = \left|X_1\right|^2 + \left|X_2\right|^2$$

Entries for each channel on the table are defined with m= (0,.............∞)
Updating all the channel table is defined with $X_1$ = [1,..........∞)
and for updating and metadata it is defined by $X_2$ = [0,.........∞).

In IP television networks, fundamentally, two kinds of update, being the total channel change and metadata change of a single channel can be mentioned. For the present invention, $X_1$ parameter is used for each table update and $X_2$ parameter is used for each change at the metadata of each channel. Consequently, $X_2$ parameter is a variable. But, if no change occurs, $X_2$ value decreases till it reaches zero.

The mentioned invention comprises an algorithm which aims to learn the information for the channel to play according to a model which depends on probability. The algorithm of the invention consists of two phases. The first one is the learning phase of metadata information of the channels and the second one is the evaluation phase in which the changing probability of the channels are evaluated/ measured.

The system always looks at the channel table to learn the channel information whenever the user changes the channel. The mentioned algorithm always works as a process at the background and continuously updates the channel table on the user. In other words, when user watches a channel or moves on the menu or when playing, this algorithm always works. Thanks to this, when the user changes the channel, it always gets the channel information from the updated table and thus never needs for probing.

While the mentioned algorithm works, it assigns values to the channels on the channel table with a statistical method. According to these values, timeout values are calculated for each channel like 0,3 sec, 0,1 sec, 0,9 sec.

The timeout value is calculated as below for the mentioned invention.

$$t_m = \left(\alpha \sum_{i=0}^{k} L_i\right) \Big/ L_m$$

The sum of the distances of all channels is shown with $\sum_{i=0}^{k} L_i$ expression, and the

distance of the $m^{th}$ channel is shown with $L_m$, the normalisation constant with $\alpha$ and
the time out value of the $m^{th}$ channel is with $t_m$ symbol.

The normalisation constant used in this calculation is chosen iteratively according to network structure.

This value, which is assigned statistically, is low for the channels whose metadata varies frequently and is high for the channels whose metadata varies less frequently. In other words, the related part of the algorithm expresses the fast control of the channels whose broadcasting information changes frequently and less control of the channels whose broadcasting information changes lesser.

The system learns the current time which elapses till the opening of the system in a loop. If the current time and the timeout time of the channel are equal, then a probing is carried out for that channel at the background.

- If the broadcast information of the channel is found to be changed after probing performed, then possibilities are calculated and it takes a higher degree value. Thus, its timeout value becomes decreased. This means a more frequent control of the information of that channel and in this way, the time between the switch of the channels will decrease when the user wants to change the channel since, differently from present day applications, the updates are conducted on the side of the client device and probing is performed when needed.

- In the case that no change occurs at the broadcasting information of the channel as a result of the probing performed, then the possibilities are re-calculated and the channel takes a lower degree value. Accordingly, the timeout value gets a larger value. And this means that, that channel is going to be controlled less. Thus, the mentioned channel will not be controlled more than enough and the system source will be used less.

These processes are made one by one and constantly for each channel.

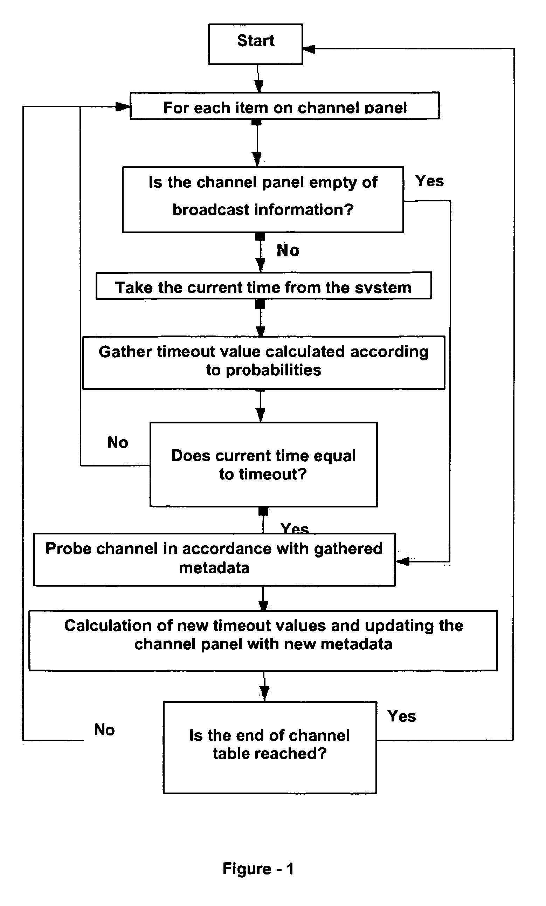

## Claims

1. A method for decreasing the time required for switching channels in client communication electronic devices such as set-top receivers, digital televisions, media players working over Internet Protocols and especially in IP televisions **characterized in that**; the client electronic device holds a table with information on channels and continuously updates said channel table by performing the following steps:

   • Controlling broadcast information on the channel table for each channel separately,

   o If there is no broadcasting information for the related channel,

   ■ probing the channel information, which is obtaining the metadata information required for decoding the channel;
   ■ calculating a timeout value for channel;
   ■ updating the channel table with the obtained information on the channel;

   o If there is a broadcast information for the related channel,

   ■ obtaining the current time at the client side;
   ■ comparing the current time with the timeout value assigned to the channel;
   ■ if the current time has reached the timeout value, probing the channel information;
   ■ determining if there have been changes in the channel information;
   ■ calculating the probability of changing the broadcast channel information of the related channel, according to the detected changes;
   ■ re-calculating a new timeout value for the channels in accordance with the calculated probability of changing the broadcast channel information;
   ■ updating the channel table with the obtained information on the channel;

   • Repeating the same process for the next channel on the table;
   • After the processes have been completed for all of the channels, iteratively repeating the same process with returning to the first channel.

2. A method according to Claim 1 **characterized in that** stochastic timeout value is calculated with the below formula:

$$t_m = \frac{\alpha \sum_{i=o}^{m} L_i}{L_m}$$

where $t_m$ is timeout value of the $m^{th}$ channel, $L_i$ is a parameter indicating the distance of $i^{th}$ channel to a situation of zero change in the broadcast channel information, $L_m$ is the distance of $m^{th}$ channel, $\alpha$ is the normalisation constant chosen according to the network structure.

## Patentansprüche

1. Verfahren zur Verkürzung der für eine Kanalumschaltung in elektronischen Client-Kommunikationsvorrichtungen erforderlichen Zeit, wie etwa in Set-Top-Empfängern, digitalen Fernsehgeräten, über Internet-Protokolle arbeitenden Medienabspielgeräten und insbesondere in IP-Fernsehprodukten, **dadurch gekennzeichnet, dass** die elektronische Client-Vorrichtung eine Tabelle mit Informationen über Kanäle enthält und die Kanaltabelle mittels Ausführung der folgenden Schritte kontinuierlich aktualisiert:

   • Kontrollieren der Sende-Informationen in der Kanaltabelle separat für jeden Kanal,

   o Wenn keine Sende-Informationen für den betreffenden Kanal vorliegen,

   ■ Abfragen der Kanalinformationen, welche die für das Decodieren des Kanals erforderlichen Metadaten-Informationen enthalten;
   ■ Berechnen eines Zeitüberschreitungswertes für den Kanal;
   ■ Aktualisieren der Kanaltabelle mit den erhaltenen Informationen über den Kanal;

   o Wenn Sende-Informationen für den betreffenden Kanal vorliegen,

   ■ Erhalten der aktuellen Zeit auf der Client-Seite;
   ■ Vergleichen der aktuellen Zeit mit dem dem Kanal zugewiesenen Zeitüberschreitungwert;
   ■ Wenn die aktuelle Zeit den Zeitüberschreitungswert erreicht hat, Abfragen der Kanal Informationen;
   ■ Bestimmen, ob Änderungen der Kanalinformationen erfolgten;

■ Berechnen der Wahrscheinlichkeit der Änderung der gesendeten Kanalinformationen des betreffenden Kanals in Übereinstimmung mit den erfassten Änderungen;
■ Neuberechnen eines neuen Zeitüberschreitungswertes für die Kanäle in Übereinstimmung mit der berechneten Wahrscheinlichkeit der Änderung der gesendeten Kanalinformationen;
■ Aktualisieren der Kanaltabelle mit den erhaltenen Informationen über den Kanal;

• Wiederholen desselben Prozesses für den nächsten Kanal in der Tabelle;
• nachdem die Prozesse für alle Kanäle vollendet wurden, iteratives Wiederholen desselben Prozesses unter Rückkehr zu dem ersten Kanal.

2. Verfahren nach Anspruch 1, **dadurch gekennzeichnet, dass** ein stochastischer Zeitüberschreitungswert mit der nachstehenden Formel berechnet wird:

$$t_m = \frac{\alpha \sum_{i=o}^{m} L_i}{L_m}$$

wobei $t_m$ der Zeitüberschreitungswert des m-ten Kanals ist, $L_i$ ein Parameter ist, der die Distanz des i-ten Kanals zu einer Situation einer Null-Änderung in den gesendeten Kanalinformationen angibt, $L_m$ die Distanz des m-ten Kanals ist und $\alpha$ den Übereinstimmung mit der Netzstruktur gewählte Normalisierungskonstante ist.

**Revendications**

1. Procédé permettant de diminuer le temps requis pour changer de chaînes dans des dispositifs électroniques de communication client tels que des récepteurs décodeurs, des téléviseurs numériques, des diffuseurs de média travaillant sur des protocoles Internet et notamment dans des téléviseurs IP **caractérisé en ce que** :

le dispositif électronique client détient un tableau avec des informations sur des chaînes et met continûment à jour ledit tableau de chaînes en effectuant les étapes consistant à :

- commander des informations de diffusion sur le tableau de chaînes pour chaque chaîne séparément,

-- s'il n'y a pas d'informations de diffusion pour la chaîne concernée,

--- sonder les informations de chaîne, ce qui consiste à obtenir les informations de métadonnées requises pour décoder la chaîne ;
--- calculer une valeur d'expiration pour la chaîné ;
--- mettre à jour le tableau de chaînes avec les informations obtenues sur la chaîne ;

-- s'il existe une information de diffusion pour la chaîne concernée,

--- obtenir l'heure actuelle du côté client ;
--- comparer l'heure actuelle avec la valeur d'expiration attribuée à la chaîne ;
--- si l'heure actuelle a atteint la valeur d'expiration, sonder les informations de chaîne ;
--- déterminer s'il y a eu des changements dans les informations de chaîne ;
--- calculer la probabilité de changement des informations de chaîne de diffusion de la chaîne concernée, selon les changements détectés ;
--- recalculer une nouvelle valeur d'expiration pour les chaînes en conformité avec la probabilité calculée de changement des informations de chaîne de diffusion ;
--- mettre à jour le tableau de chaînes avec les informations obtenues sur la chaîne ;

- répéter le même processus pour la chaîne suivante sur le tableau ;
- après que les processus ont été achevés pour toutes les chaînes, répéter de façon itérative le même processus avec retour à la première chaîne.

2. Procédé selon la revendication 1, **caractérisé en ce qu'**une valeur d'expiration stochastique est calculée avec la formule ci-dessous :

$$t_m = \frac{\alpha \sum_{i=o}^{m} L_i}{L_m}$$

où $t_m$ est la valeur d'expiration de la m$^{\text{ième}}$ chaîne, $L_i$ est un paramètre indiquant la distance de la i$^{\text{ième}}$ chaîne à une situation de changement nul dans les informations de chaîne de diffusion, $L_m$ est la distance de la m$^{\text{ième}}$ chaîne, $\alpha$ est la constante de normalisation choisie selon la structure de réseau.

Figure - 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009019469 A
- US 2006190594 A1
- US 2007186243 A1
- US 2006117342 A1